# EUROPEAN PATENT APPLICATION

(11) **EP 3 936 548 A1**
(43) Date of publication of application: **12.01.2022**
(21) Application number: 20767113.2
(22) Date of filing: 14.02.2020
(51) Int. Cl.: C08G 59/24, C08G 59/50, C08J 5/24

(54) **EPOXY RESIN COMPOSITION AND CURED PRODUCT THEREOF, AND FIBER-REINFORCED COMPOSITE**

(30) Priority: 06.03.2019 JP 2019040444
(71) Applicant: MITSUBISHI GAS CHEMICAL COMPANY, INC., Chiyoda-ku Tokyo 100-8324 (JP)
(72) Inventor: IKEUCHI, Kousuke, Hiratsuka-shi, Kanagawa 254-0016 (JP)
(74) Representative: Hoffmann Eitle
(86) International application number: PCT/JP2020/005792
(87) International publication number: WO 2020/179413

(57) **Abstract**

An epoxy resin composition comprising: (A) an epoxy resin having an alicyclic structure and (B) an epoxy resin curing agent comprising bis(aminomethyl)cyclohexane; a cured product thereof; and a fiber-reinforced composite material including the cured product and a reinforcing fiber.

## Description

### Technical Field

The present invention relates to an epoxy resin composition, a cured product thereof and a fiber-reinforced composite material including the cured product of the epoxy resin composition and a reinforcing fiber.

### Background Art

Of the fiber reinforced composite materials (hereinafter also referred to as "FRP (Fiber Reinforced Plastics)"), carbon fiber-reinforced composite materials (Carbon Fiber Reinforced Plastics: CFRP) have extremely high elastic modulus, strength and are lightweight, and thus have been attracting attention as an alternative material to metal. Demand for CFRPs in applications of automotive structural materials, wind turbine blades, pressure vessels and aerospace applications is expected to increase, and thus demand for carbon fiber and matrix resin such as epoxy resin, which are used for CFRPs, has also been increasing.

Meanwhile, since the method of molding FRP is different in each of the applications of automotive structural materials, wind turbine blades, pressure vessels and aerospace applications, properties required for matrix resin for FRPs are also different depending on the application.

For example, wind turbine blades have been molded by infusion molding, the Va-RTM process (vacuum assisted resin transfer molding) or the light-RTM process. In these processes, for example, reinforcing fiber is previously placed in a mold with an upper mold and a lower mold using film or FRP, and the inside of the mold is evacuated and the mold is filled with an epoxy resin composition, which is a matrix resin, at atmospheric pressure to impregnate the reinforcing fiber with the resin composition, and then the epoxy resin is cured to perform molding.

In infusion molding, the Va-RTM process and the light-RTM process, it usually takes about several ten minutes to fill a mold with an epoxy resin composition prepared by mixing an epoxy resin and an epoxy resin curing agent due to the nature of the molding processes. Thus, the epoxy resin composition to be used in these molding processes is required to have low viscosity and long pot life. Isophoronediamine, a polyamine compound having a polyether skeleton, or the like is used as the epoxy resin curing agent.

For FRPs used for pressure vessels, molding by the filament winding process is employed. In the filament winding process, reinforcing fiber yarn impregnated with a matrix resin such as an epoxy resin composition is used to cover the outer surface of a liner and the matrix resin is cured. When the epoxy resin composition used in this method has short pot life and is fast curing, the epoxy resin is cured at the stage before molding. Thus, fast curing epoxy resin compositions cannot be used in the filament winding process.

By contrast, FRPs for automotive structural materials are molded by the high cycle RTM process. This is an improvement of the conventional RTM process.

The conventional RTM process is a type of closed molding using a pair of upper and lower molds, in which a fiber-reinforced preform is placed in the mold, the mold is clamped and sealed, and then a resin such as an epoxy resin composition is injected into the mold via an injection port so as to impregnate the fiber-reinforced preform with the resin, and the resin is cured and then released from the mold. In the conventional RTM process, however, it takes a few hours for molding (including placing preform, impregnating with resin, curing and releasing the resin), and thus in the production of FRPs for automotive structural materials, the more productive, high-cycle RTM process is used.

In the molding technique of the high-cycle RTM process, all of the time of placing fiber-reinforced preform, the time of impregnation with resin and the time of curing and releasing resin are significantly reduced. In the process from impregnation with resin to curing in the high-cycle RTM process such as the high-pressure RTM process, which is a type of the high-cycle RTM process, reinforcing fiber is placed in a pair of upper and lower molds and the molds are sealed, and the pressure in the mold is reduced. Next, an epoxy resin, which is the main agent of an epoxy resin composition, and an epoxy resin curing agent are sent to the mixing head from separate tanks under pressure in the form of mist for collisional mixing in the head, and then the mixture is immediately injected into the mold to impregnate the reinforcing fiber therewith, and the epoxy resin is cured. The epoxy resin composition after collisional mixing is injected into the mold through a plurality of injection ports under high pressure so as to increase the filling speed into a mold and increase the impregnation speed for the reinforcing fiber.

In the high-cycle RTM process, an epoxy resin and an epoxy resin curing agent are mixed and then immediately injected into the mold, and thus the epoxy resin composition, which is a mixture of the epoxy resin and the epoxy resin curing agent, does not need to have long pot life. Meanwhile, high impregnation properties for reinforcing fiber, high filling speed for a mold, and fast curing are required from the viewpoint of productivity, and thus the epoxy resin composition used in the high-cycle RTM process is required to have low viscosity and be fast curing.

Polyamine is known to be useful as an epoxy resin curing gent. For example, PTLs 1 to 3 disclose a low viscosity, fast curing epoxy resin curing agent comprising bis(aminomethyl)cyclohexane.

PTL 4 discloses a process for the preparation of a fiber-reinforced composite article using a resin composition comprising (b1) a liquid epoxy resin, (b2) a curing agent comprising 1,3-bis (aminomethyl)cyclohexane, and (b3) an accelerator comprising at least one compound selected from the group consisting of sulfonic acid and imidazolium salt of a sulfonic acid.

### Citation List

### Patent Literature

PTL 1: JP-2001-163955A
PTL 2: JP-2011-6499A
PTL 3: JP-2015-93948A
PTL 4: JP-2017-509781A

### Summary of Invention

### Technical Problem

Design has been considered important for FRPs for luxury cars out of applications of automotive structural materials. In particular, a material is desired, which has excellent weatherability with little yellowing of a cured product even when exposed to an environment of ultraviolet irradiation for long time. However, conventional cured products of an epoxy resin composition for FRP do not have sufficient weatherability.

An object of the present invention is to provide an epoxy resin composition which has low viscosity and is fast curing, and can form a cured product having excellent weatherability with little yellowing even when exposed to an environment of ultraviolet irradiation for a long time; a cured product thereof; and a fiber-reinforced composite material including the cured product and a reinforcing fiber.

### Solution to Problem

The present inventor has found that the above problem can be solved by an epoxy resin composition comprising an epoxy resin which is a main agent and has a specific structure, and an epoxy resin curing agent comprising bis (aminomethyl)cyclohexane.

Accordingly, the present invention relates to the following.
[1] An epoxy resin composition comprising:
   (A) an epoxy resin having an alicyclic structure and
   (B) an epoxy resin curing agent comprising bis(aminomethyl)cyclohexane.
[2] The epoxy resin composition according to [1], wherein the component (A) is an epoxy resin represented by the following formula (1): 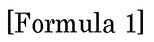 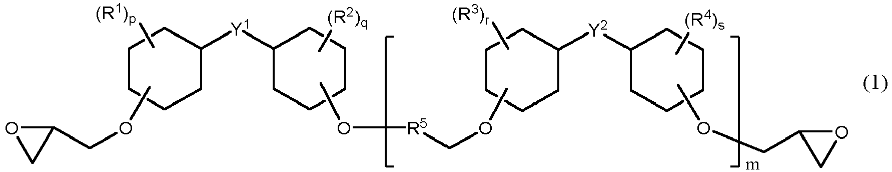 wherein R¹ to R⁴ are each independently an alkyl group having 1 to 6 carbon atoms, p, q, r and s are each independently an integer of 0 to 4; a plurality of R¹s, R²s, R³s and R⁴s may all be the same or different from each other; Y¹ and Y² are each independently a single bond, -CH₂-, -CH(CH₃)- or -C(CH₃)₂-; R⁵ is-CH₂CH(OH)- or -CH(OH)CH₂-; and m represents an average number of repeat units and is a number of 0 to 2.
[3] The epoxy resin composition according to [1] or [2], wherein the content of bis(aminomethyl)cyclohexane in the component (B) is 30% by mass or more.
[4] The epoxy resin composition according to any one of [1] to [3], wherein the content of a sulfonic acid curing accelerator is less than 0.5% by mass.
[5] A cured product of the epoxy resin composition according to any one of [1] to [4].
[6] A fiber-reinforced composite material comprising a cured product of the epoxy resin composition according to any one of [1] to [4] and a reinforcing fiber.
[7] The fiber-reinforced composite material according to [6], wherein the reinforcing fiber is carbon fiber.

### Advantageous Effect of Invention

The epoxy resin composition of the present invention enables FRP for automotive structural materials and building materials to be produced with high productivity by the high cycle RTM process or the like. Furthermore, the present invention can provide a cured product and FRP having excellent weatherability with little yellowing even when exposed to an environment of ultraviolet irradiation for long time.

### Brief Description of Drawing

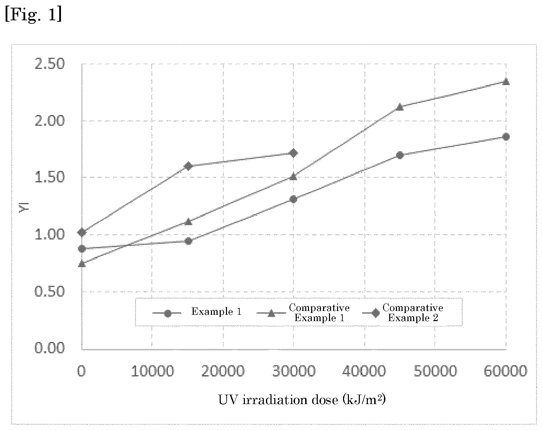

[Fig. 1] Fig. 1 is a graph showing the results of the weatherability test of the cured products prepared in Example 1, Comparative Example 1 and Comparative Example 2.

### Description of Embodiments

### [Epoxy resin composition]

The epoxy resin composition of the present invention comprises (A) an epoxy resin having an alicyclic structure (hereinafter also simply referred to as "component (A)") and (B) an epoxy resin curing agent comprising bis(aminomethyl)cyclohexane (hereinafter also simply referred to as "component (B)").

The epoxy resin composition prepared by mixing the component (A), which is the main agent, and the component (B), which is a curing agent component comprising bis(aminomethyl)cyclohexane, has low viscosity and is fast curing. Furthermore, the epoxy resin composition can provide a cured product having excellent weatherability with little yellowing even when exposed to an environment of ultraviolet irradiation for long time.

### <Epoxy resin (A)>

The epoxy resin composition of the present invention comprises (A) an epoxy resin having an alicyclic structure, as the main agent.

The component (A) may be a resin having at least one alicyclic structure and at least two epoxy groups. The resin is preferably a liquid epoxy resin which is liquid at room temperature (25°C) to obtain a low viscosity epoxy resin composition.

The number of ring carbon atoms in the alicyclic structure of the component (A) is preferably 5 to 20, more preferably 5 to 12, further preferably 5 to 10, still more preferably 5 to 8, and still further preferably 6. The alicyclic structure may be saturated or unsaturated, and may be monocyclic or polycyclic. It is preferable that the alicyclic structure is a saturated alicyclic structure having no unsaturated bond from the viewpoint of weatherability. The alicyclic structure may have a substituent. Examples of the substituents include an alkyl group having 1 to 8 carbon atoms, hydroxyl group, and an alkoxy group having 1 to 8 carbon atoms.

Examples of the alicyclic structures include, but are not limited to, a cycloalkane ring, a cycloalkene ring, a bicycloalkane ring, a bicycloalkene ring and a tricycloalkane ring. Of them, a cycloalkane ring is preferred, a cycloalkane ring having 5 to 8 carbon atoms is more preferred, and a cyclohexane ring is further preferred.

It is preferable that the component (A) is an epoxy resin which has an alicyclic structure and does not have an aromatic ring from the viewpoint of weatherability of the cured product. When the component (A) is an epoxy resin which does not have an aromatic ring, a cured product having excellent weatherability with little yellowing even when exposed to an environment of ultraviolet irradiation for long time can be obtained.

Examples of preferred components (A) include an epoxy resin prepared by the reaction of at least one selected from the group consisting of a polyol having an alicyclic structure, a polyamine having an alicyclic structure and a compound having an alicyclic structure and a hydroxy group and an amino group, with epichlorohydrin.

Examples of polyols having an alicyclic structure include dihydroxycyclohexane, bicyclohexanediol, 2,2-bis(4-hydroxycyclohexyl)propane and bis(4-hydroxycyclohexyl)methane.

Examples of polyamines having an alicyclic structure include bis(aminomethyl)cyclohexane and diaminodicyclohexyl methane. Examples of compounds having an alicyclic structure and a hydroxy group and an amino group include an aminocyclohexanol.

Preferred examples of components (A) also include hydrogenated epoxy resins prepared by hydrogenating an epoxy resin having an aromatic ring, such as a biphenol epoxy resin, a bisphenol A epoxy resin, a bisphenol F epoxy resin and a phenol novolac epoxy resin.

Of the above resins, an epoxy resin represented by the following formula (1) is more preferred as the component (A) from the viewpoint of low viscosity and fast curing of the epoxy resin composition and mechanical strength and weatherability of cured products and availability. 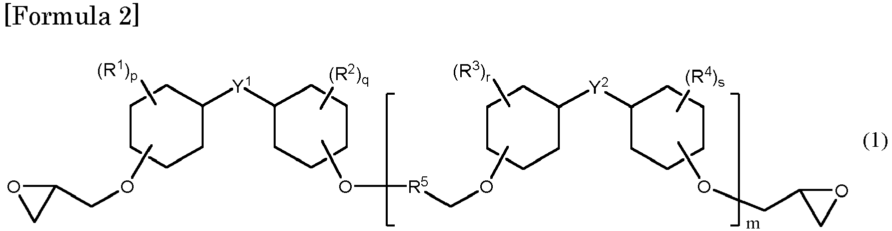
wherein R¹ to R⁴ are each independently an alkyl group having 1 to 6 carbon atoms, p, q, r and s are each independently an integer of 0 to 4; a plurality of R¹s, R²s, R³s and R⁴s may all be the same or different from each other; Y¹ and Y² are each independently a single bond, -CH₂-, -CH(CH₃)- or -C(CH₃)₂-; R⁵ is-CH₂CH(OH)- or -CH(OH)CH₂-; and m represents an average number of repeat units and is a number of 0 to 2.
R¹ to R⁴ are preferably an alkyl group having 1 to 4 carbon atoms, and more preferably at least one selected from the group consisting of a methyl group, an ethyl group, an isopropyl group and a t-butyl group.
p, q, r and s are all preferably an integer of 0 to 2, more preferably 0 or 1, and further preferably 0.
Y¹ and Y² are preferably -CH₂- or -C(CH₃)₂-, and more preferably -C(CH₃)₂-.

Furthermore, m is preferably 0 to 1, more preferably 0 to 0.5 and further preferably 0 to 0.2 from the viewpoint of low viscosity and securing mechanical strength of cured products.

The epoxy resin represented by the formula (1) may be an epoxy resin prepared by the reaction between a compound represented by the following formula (2) and epichlorohydrin, or may be a hydrogenated epoxy resin prepared by hydrogenation of an epoxy resin represented by the following formula (3). 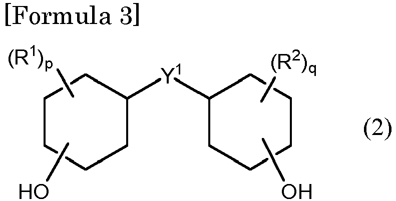 wherein R¹, R², p, q, and Y¹ are as defined above. 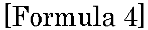 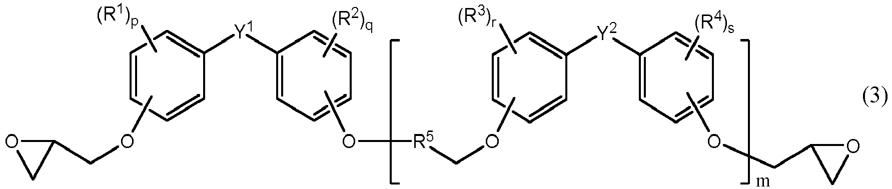 wherein R¹ to R⁵, p, q, r, s, Y¹ and Y², and m are as defined above.

It is preferable that the degree of hydrogenation of the hydrogenated epoxy resin is close to 100% from the viewpoint of provision of a cured product having excellent weatherability. The degree of hydrogenation may be 50% or more, preferably 70 to 100%, more preferably 80 to 100%, further preferably 90 to 100%, and still more preferably 95 to 100%.

The epoxy equivalent of the component (A) is preferably 400 g/ equivalent or less, more preferably 300 g/ equivalent or less, further preferably 250 g/equivalent or less, and still more preferably 220 g/ equivalent or less from the viewpoint of satisfying both low viscosity and fast curing of the epoxy resin composition.

### <Epoxy resin curing agent (B)>

The epoxy resin composition of the present invention comprises (B) an epoxy resin curing agent comprising bis(aminomethyl)cyclohexane. When the component (B) is used as a curing agent, the resulting epoxy resin composition has low viscosity and is fast curing, and a cured product thereof has excellent weatherability with little yellowing even when exposed to an environment of ultraviolet irradiation for long time.

Examples of bis(aminomethyl)cyclohexane include 1,2-bis(aminomethyl)cyclohexane, 1,3-bis(aminomethyl)cyclohexane and 1,4-bis(aminomethyl)cyclohexane. One of them may be used or two or more of them may be used in combination. 1,3-bis(aminomethyl)cyclohexane is preferred from the viewpoint of low viscosity and fast curing.

Bis(aminomethyl)cyclohexane includes both a cis-form and a trans-form. The content ratio of the cis-form to the trans-form is optional, and when both the cis-form and the trans-form are included, the content ratio of the cis-form/ the trans-form is preferably 99/1 to 1/99, more preferably 95/5 to 30/70, further preferably 90/10 to 50/50, and still more preferably 85/15 to 60/40 because the freezing point becomes low and bis(aminomethyl)cyclohexane can be handled in the form of liquid even in low temperature environment including winter.

Although the component (B) may comprise a curing agent component in addition to bis(aminomethyl)cyclohexane, it is preferable that the component (B) is composed only of an epoxy resin curing agent having no aromatic ring from the viewpoint of weatherability of the cured product. When the component (B) is composed only of an epoxy resin curing agent having no aromatic ring, a cured product having excellent weatherability with little yellowing even when exposed to an environment of ultraviolet irradiation for long time can be obtained.

Preferred examples of curing agent components other than bis(aminomethyl)cyclohexane include menthenediamine, isophoronediamine (IPDA), diaminodicyclohexylmethane, bis(4-amino-3-methylcyclohexyl)methane, N-aminomethylpiperazine, N-aminoethylpiperazine, bis(aminomethyl)tricyclodecane, ethylenediamine, diethylenetriamine, triethylenetetramine, tetraethylenepentamine, pentaethylenehexamine, polyoxyalkylenediamine and polyoxyalkylenetriamine. One of them may be used alone or two or more of them may be used in combination.

The content of bis(aminomethyl)cyclohexane in the component (B) is preferably 30% by mass or more, more preferably 50% by mass or more, further preferably 70% by mass or more, still more preferably 80% by mass or more, and still further preferably 90% by mass or more from the viewpoint of low viscosity and fast curing of the epoxy resin composition and weatherability of the cured product. Furthermore, the upper limit is 100% by mass.

The epoxy resin composition of the present invention may also include an epoxy resin other than the component (A), a modifying component such as a filler and a plasticizer, a component for adjusting flowability such as a thixotropic agent, and other components such as a pigment, a leveling agent, a tackifier and elastomer fine particles depending on the use.

The total amount of the component (A) and the component (B) in the epoxy resin composition is preferably 50% by mass or more, more preferably 70% by mass or more, further preferably 80% by mass or more, and still more preferably 90% by mass or more in order to obtain the effect of the present invention. Furthermore, the upper limit is 100% by mass.

Although the epoxy resin composition of the present invention may include a known curing accelerator as an optional component, sufficient fast curing is achieved even when a curing accelerator is not included.

It is preferable that the content of a curing accelerator such as p-toluenesulfonic acid and a salt thereof out of the curing accelerators is small in order to avoid corrosion in production line and molds when the composition is used in the high cycle RTM process and the like, generation of voids and defects caused by outgas in a molding process, and degradation of appearance of cured products. The content of the sulfonic acid curing accelerator is preferably less than 0.5% by mass, more preferably 0.3% by mass or less, further preferably 0.1% by mass or less, and still more preferably 0% by mass in the epoxy resin composition of the present invention.

The content ratio between the component (A) and the component (B) in the epoxy resin composition of the present invention is such that the numerical ratio of active amine hydrogen atoms in the component (B) to epoxy groups in the component (A) (number of active amine hydrogen atoms in component (B)/ number of epoxy groups in the component (A)) is preferably 1/0.5 to 1/2, more preferably 1/0.75 to 1/1.5, and further preferably 1/0.8 to 1/1.2.

The epoxy resin composition of the present invention has a viscosity at a temperature of 80°C of preferably 500 mPa·s or less, more preferably 200 mPa·s or less, further preferably 100 mPa·s or less, and still more preferably 50 mPa·s or less. When the epoxy resin composition has a viscosity at a temperature of 80°C of 500 mPa·s or less, productivity is improved when the composition is used for FRP. The lower limit of the viscosity at a temperature of 80°C of the epoxy resin composition is not particularly limited, and the lower limit is preferably 5 mPa·s or more in order to prevent occurrence of disturbance in reinforcing fiber caused by turbulence occurring in a mold due to an increase in the Reynolds number in molding of FRP.

It is preferable that the epoxy resin composition of the present invention has an initial viscosity at a temperature of 80°C, 2 minutes and 30 seconds after mixing the component (A) and the component (B) in the above range. The viscosity may be measured by using an E-type viscometer and more specifically the viscosity may be measured by the method described in Examples.

For the epoxy resin composition of the present invention, the gelation time at a temperature of 80°C is preferably 40 minutes or less, and more preferably 35 minutes or less from the viewpoint of fast curing, and preferably 0.5 minutes or more, and more preferably 1.0 minute or more from the viewpoint of workability. The gelation time at a temperature of 130°C is preferably 10 minutes or less, and more preferably 7 minutes or less, and preferably 0.5 minute or more, and more preferably 1.0 minute or more from the viewpoint of workability.

The gelation time may be measured by the method described in Examples using a rheometer. More specifically, storage modulus G' and loss elastic modulus G" of the epoxy resin composition are measured at a temperature of 80°C or 130°C at a frequency of 1Hz with a plate-to-plate distance of 0.5 mm using a rheometer, and the point at which G' intersects with G" is determined as the gelation time.

The method for producing the epoxy resin composition of the present invention is not particularly limited, and the composition may be produced by mixing the component (A), the component (B) and other components as needed by a known method using a known apparatus.

Since the epoxy resin composition of the present invention has characteristics of low viscosity and fast curing, it is preferable that the composition is used for a fiber-reinforced composite material, in particular, a carbon fiber-reinforced composite material.

### [Cured product]

The cured product of the epoxy resin composition of the present invention (hereinafter also simply referred to as "the cured product of the present invention") is prepared by curing the epoxy resin composition of the present invention described above by a known method. Conditions for curing the epoxy resin composition are appropriately selected depending on the purpose of use and their form, and are not particularly limited.

The form of the cured product of the present invention is also not particularly limited, and may be selected depending on the purpose of use. Hereinafter, a fiber-reinforced composite material including the cured product will be described.

### [Fiber-reinforced composite material]

The fiber-reinforced composite material (FRP) of the present invention comprises a cured product of the epoxy resin composition and a reinforcing fiber, and may be prepared by impregnating reinforcing fiber with the epoxy resin composition and then curing the composition.

Examples of reinforcing fibers include glass fibers, carbon fibers, boron fibers and metal fibers. One reinforcing fiber may be used alone or two or more of them may be used in combination. Of them, carbon fiber is preferred because the resulting composite material is strong and lightweight. The fiber-reinforced composite material of the present invention is preferably a carbon fiber-reinforced composite material (CFRP) comprising a cured product of the epoxy resin composition and carbon fiber.

The carbon fiber used for CFRP may be those produced by using rayon or polyacrylonitrile (PAN) as a starting material, or may be those produced by spinning petroleum or coal pitch as a starting material. Furthermore, recycled products prepared by reusing mill ends of carbon fiber and recycled carbon fiber prepared by removing resin from CFRP may also be used. Examples of the form of carbon fiber include a form produced by simply aligning monofilaments or multifilaments in one direction or by alternately crossing them, and various forms of fabric such as knit or woven fabric, nonwoven fabric and mats. Of them, the forms of monofilament, fabric, nonwoven fabric and mats are preferred, and the form of fabric is more preferred.

The carbon fiber has an average fiber diameter of preferably 1 to 100 µm, more preferably 3 to 50 µm, and further preferably 4 to 20 µm. When the average fiber diameter is in that range, processing is easy and the resulting CFRP has excellent elastic modulus and strength. The average fiber diameter may be measured in observation with, for example, a scanning electron microscope (SEM). 50 or more fibers may be randomly sampled and the length may be measured to calculate the number average fiber diameter.

The carbon fiber has a fineness of preferably 20 to 4,500 tex, and more preferably 50 to 4,000 tex. When the fineness is in that range, impregnation with the epoxy resin composition is easy, and the resulting composite material has excellent elastic modulus and strength. The fineness may be determined by measuring the weight of long fiber having any length and converting it into the weight per 1,000 m. Carbon fiber having about 500 to 60,000 filaments may usually be preferably used.

FRP may also comprise a foaming material in addition to the cured product of the epoxy resin composition and reinforcing fiber. The foaming material is not particularly limited, and examples thereof include a foaming material made of a resin material such as a polyvinyl chloride resin, a polyurethane resin, a polystyrene resin, a polyolefin resin, an acrylic resin, a phenolic resin, a polymethacrylimide resin and an epoxy resin.

### <Method for producing fiber-reinforced composite material>

Although the method for producing a fiber-reinforced composite material of the present invention is not particularly limited, since the epoxy resin composition of the present invention is fast curing, it is preferable that the component (A) and the component(B) are mixed immediately before molding and then reinforcing fiber is quickly impregnated with the composition, and the composition is cured.

It is preferable that to impregnate reinforcing fiber with the epoxy resin composition and cure the composition in a shorter time, the method for producing the fiber-reinforced composite material of the present invention includes a step of molding by the low-pressure RTM process, the middle-pressure RTM process, the high-pressure RTM process, the compression RTM process, the liquid compression molding process, the liquid lay-down molding process, the spray lay-down molding process, the surface RTM process, the prepreg compression molding process, or the liquid cast molding process. Of these molding processes, the low-pressure RTM process, the middle-pressure RTM process and the high-pressure RTM process are preferred from the viewpoint of applicability to the high-cycle RTM process. The middle-pressure RTM process and the high-pressure RTM process are more preferred, and the high-pressure RTM process is far more preferred from the viewpoint of molding speed.

In the present description, the "low pressure" in the low-pressure RTM process means that the pressure is less than 0.5 MPa when feeding under pressure an epoxy resin, which is the main agent of the epoxy resin composition, and an epoxy resin curing agent for mixing them. Likewise, the "middle pressure" in the middle-pressure RTM process means that the pressure is 0.5 MPa or more and less than 7 MPa, and the "high pressure" in the high-pressure RTM process means that the pressure is 7 MPa or more and 20 MPa or less.

In the above molding process, since the component (A) and the component (B) used for the epoxy resin composition of the present invention can be mixed and used immediately before molding, the epoxy resin composition does not need to have long pot life. Furthermore, since the epoxy resin composition has low viscosity and is fast curing, the mold is filled with the composition fast and reinforcing fiber is impregnated with the composition fast, and the composition is cured fast, and consequently the molding time can be significantly reduced. Thus, the epoxy resin composition of the present invention is particularly suitable for the above molding process. Furthermore, by using the above molding process and applying the epoxy resin composition of the present invention thereto, middle to large-scale FRPs for automotive structural materials and building materials can be produced at high productivity.

It is preferable that in the high-pressure RTM process, a collision mixer is used as apparatus for mixing the component (A), which is the main agent of the epoxy resin composition, and the component (B), which is an epoxy resin curing agent. For example, reinforcing fiber is placed in a pair of upper and lower molds and the molds are sealed, and the pressure in the mold is reduced. Next, the component (A) and the component (B) are put in a separate tank, and are individually discharged through extremely small holes (orifices) at high speed to allow them to collide and be mixed in the mixing chamber of the collision mixer. The epoxy resin composition prepared as described above is injected into a mold under high pressure to impregnate reinforcing fiber with the epoxy resin composition, and then the epoxy resin is cured.

It is preferable that in the low-pressure RTM process, a dynamic mixer is used as apparatus for mixing the component (A), which is the main agent of the epoxy resin composition, and the component (B), which is an epoxy resin curing agent. A dynamic mixer is equipped with a high-speed cylindrical rotor having an uneven surface. For example, the component (A) and the component (B) are put in a separate tank, and are individually fed to the dynamic mixer and the two liquids are mixed with the rotor. The epoxy resin composition prepared as described above is injected into a mold to impregnate reinforcing fiber with the epoxy resin composition, and then the epoxy resin is cured. The low-pressure RTM process is advantageous when the amount of the component (A) mixed is significantly different from that of the component (B), and is advantageous in reduction of cost of equipment and space for equipment.

It is preferable that in the middle-pressure RTM process a static mixer is used as apparatus for mixing the component (A), which is the main agent of the epoxy resin composition, and the component (B), which is an epoxy resin curing agent. A static mixer is a tubular mixer incorporating one or more static mixing units composed of many mixing elements. For example, the component (A) and the component (B) are put in a separate tank, and are individually fed to the static mixer. By passing the two liquids of the component (A) and the component (B) through the twisted elements of the static mixer, the two liquids are mixed due to the action of division, conversion and inversion. The epoxy resin composition prepared as described above is injected into a mold to impregnate reinforcing fiber with the epoxy resin composition, and then the epoxy resin is cured. The middle-pressure RTM process is advantageous in that the epoxy resin composition can be fed to a mold under pressure and is lower in cost of equipment.

When FRP also comprises a foaming material in addition to the cured product of the epoxy resin composition and reinforcing fiber, the reinforcing fiber and the foaming material are placed in the mold and FRP may be produced in the same manner as described above.

The epoxy resin curing agent and the epoxy resin composition of the present invention may be suitably used also in the liquid compression molding (LCM) process and the liquid lay-down molding process. In the LCM process and the liquid lay-down molding process, the epoxy resin composition is cast on reinforcing fiber (on reinforcing fiber and a foaming material when FRP also comprises a foaming material) to impregnate the fiber therewith, and then the epoxy resin is cured by compression by heating.

In molding of FRP, the temperature at which the epoxy resin composition is injected into a mold and reinforcing fiber is impregnated therewith is preferably 30 to 120°C, and more preferably 50 to 100°C. When the component (A) and the component (B) are supplied from a separate tank and mixed immediately before molding, the temperature in mixing may be individually set. The temperature of the component (A) in mixing may be appropriately adjusted depending on the viscosity of the epoxy resin, and is preferably 30 to 120°C, and more preferably 50 to 100°C. The temperature of the component (B) in mixing is preferably 5 to 30°C, and more preferably 10 to 25°C from the viewpoint of prevention of increase in viscosity.

The time of impregnating reinforcing fiber with the epoxy resin composition is preferably 0.1 to 15 minutes, more preferably 0.2 to 10 minutes, and further preferably 0.5 to 5 minutes from the viewpoint of moldability and productivity.

The temperature for curing the epoxy resin composition is preferably 50 to 200°C, more preferably 80 to 150°C, and further preferably 100 to 150°C. When the temperature for curing is 50°C or more, curing of the epoxy resin proceeds thoroughly, and the resulting FRP has excellent mechanical properties. When the temperature is 200°C or less, the cost for adjusting the temperature of the mold is low. The time of curing the epoxy resin composition may be appropriately selected depending on the temperature of curing and the like, and is preferably 0.1 to 15 minutes, more preferably 0.2 to 10 minutes, and further preferably 0.5 to 5 minutes from the viewpoint of moldability and productivity.

FRP may be produced at high productivity by the above-mentioned molding process using the epoxy resin composition of the present invention. The fiber-reinforced composite material of the present invention is preferably a carbon fiber-reinforced composite material, and is preferably an automotive structural material and a building material, and in particular an automotive structural material. Examples of automotive structural materials include bumpers, spoilers, cowlings, radiator grilles, garnishes, hoods, trunk lids, fender panels, door panels, roof panels, instrument panels, door trims, quarter trims, roof linings, pillar garnishes, deck trims, tonneau boards, package trays, dashboards, console boxes, kicking plates, switch bases, sheet backboards, sheet frames, armrests, sun visors, intake manifolds, engine head covers, engine undercovers, and oil filter housings.

### Examples

Hereinafter, the present invention will be described in more detail with reference to Examples and Comparative Examples, but the present invention is not limited the following Examples. The following methods were used for the measurement and evaluation of the epoxy resin composition.

### (Viscosity)

The viscosity of the epoxy resin composition was measured at 80°C by using an E-type viscometer "TVE-22H Model Viscometer, cone-plate type" (manufactured by Toki Sangyo Co., Ltd.). The measurement of the viscosity at 80°C was started immediately after preparing the epoxy resin composition by mixing an epoxy resin and an epoxy resin curing agent, and the measured value was read every 2 minutes and 30 seconds.

### (Gelation time)

Rheometer "ARES-G2" (manufactured by TA Instruments Inc.) was used for evaluation at 80°C and 130°C. The epoxy resin composition was filled between aluminum plates heated at 80°C or 130°C, and the storage elastic modulus G' and the loss elastic modulus G" were measured at a temperature of 80°C and 130°C, a frequency of 1 Hz with a plate-to-plate distance of 0.5 mm, and the point at which G' intersects with G" was determined as the gelation time. A shorter gelling time means that the composition is fast curing.

### (Glass transition temperature (Tg))

Tg of the cured product of the epoxy resin composition was determined by differential scanning calorimetry of the epoxy resin composition cured by heating at 130°C for 30 minutes using a differential scanning calorimeter "DSC 6200" (manufactured by Seiko Instruments Inc.) at a condition of a temperature increase rate of 5°C/minutes at 30 to 250°C.

### (Weatherability test)

The weatherability test was performed according to ISO4982 Part 3 Method A.

A specimen was prepared by curing the epoxy resin compositions prepared in Examples in a 20 mm × 20 mm × 2 mm thick mold at 130°C for 30 minutes. The specimen was placed in a UV tester "SUNTEST XXL+" (manufactured by Toyo Seiki Seisaku-sho Ltd.) and a cycle was repeated, in which the specimen was under conditions of drying at a temperature of 38°C for 102 minutes (humidity 50%) and then water spraying for 18 minutes while being irradiated with ultraviolet light having a wavelength of 300 to 400 nm using a xenon lamp at an intensity of an illuminance of 60 W/m².

The specimen was taken out after reaching a predetermined UV irradiation dose (kJ/m²) and the YI value was measured by using a color difference meter ("ZE2000" manufactured by Nippon Denshoku Industries, Co., Ltd.) in accordance with JIS K7373:2006. A smaller increase in the YI value means higher weatherability of the cured product. A YI value of 2.0 or less is particularly preferred with little yellowish color in the cured product in visual observation.

### Example 1 (Production and evaluation of epoxy resin composition)

A hydrogenated bisphenol A liquid epoxy resin ("YX8000" manufactured by Mitsubishi Chemical Corporation) and hydrogenated bisphenol A diglycidyl ether (epoxy equivalent 205 g/ equivalent), which are the epoxy resin having an alicyclic structure (A), were used as the main agent, and 1,3-bis(aminomethyl)cyclohexane (1,3-BAC, manufactured by Mitsubishi Gas Chemical Company Inc., cis/ trans ratio = 77/23) was used as the epoxy resin curing agent (B).

The epoxy resin and the epoxy resin curing agent described above were mixed so that the numerical ratio of epoxy groups in the epoxy resin, which is the main agent, to active amine hydrogen atoms in the epoxy resin curing agent is 1/ 1.05 (number of active amine hydrogen atoms in epoxy resin curing agent/ number of epoxy groups in the epoxy resin being 1/0.95) to produce an epoxy resin composition.

The epoxy resin composition prepared was evaluated by the method described above. The results of the measurement of the viscosity of the compositions, the gelation time and the glass transition temperature (Tg) of the cured product are shown in Table 1. The results of the weatherability test are shown in Table 2.

### Comparative Example 1

An epoxy resin composition was produced in the same manner as in Example 1 except for using isophoronediamine (IPDA, manufactured by EVONIK) as the epoxy resin curing agent instead of 1,3-bis(aminomethyl)cyclohexane, and the composition was evaluated by the method described above. The results are shown in Table 1 and Table 2.

### Comparative Example 2

An epoxy resin composition was produced in the same manner as in Example 1 except for using 4,4'-methylene bis(cyclohexylamine) (PACM, manufactured by Tokyo Chemical Industry, Co., Ltd.) as the epoxy resin curing agent instead of 1,3-bis(aminomethyl)cyclohexane, and the composition was evaluated by the method described above. The results are shown in Table 1 and Table 2.

**Table 1**

| | Viscosity of composition (80°C) | | | | | | Gelation time (80°C) | Gelation time (130°C) | Tg of cured product (130°C 30 minutes) |
|---|---|---|---|---|---|---|---|---|---|
| | 2.5 min. | 5.0 min. | 7.5 min. | 10.0 min. | 12.5 min. | 15.0 min. | | | |
| | mPa-s | | | | | | min. | min. | °C |
| Example 1 | 9 | 15 | 21 | 50 | 118 | 258 | 32 | 6 | 112 |
| Comparative Example 1 | 10 | 11 | 15 | 32 | 65 | 156 | 44 | 8 | 117 |
| Comparative Example 2 | 75 | 84 | 98 | 120 | 168 | 254 | 53 | 11 | 105 |

**Table 2**

| UV irradiation dose (kJ/m²) | YI value | | |
|---|---|---|---|
| | Example 1 | Comparative Example 1 | Comparative Example 2 |
| 0 | 0.88 | 0.75 | 1.02 |
| 15000 | 0.94 | 1.12 | 1.60 |
| 30000 | 1.31 | 1.51 | 1.72 |
| 45000 | 1.70 | 2.12 | |
| 60000 | 1.86 | 2.35 | |

The results of Table 2 are also shown in Fig. 1. Fig. 1 is a graph showing the results of the weatherability test of the cured products prepared in Example 1, Comparative Example 1 and Comparative Example 2, plotting the UV irradiation dose (kJ/m²) on the horizontal axis and the YI value of the cured products on the horizontal axis.

Table 1 shows that the epoxy resin composition of the present invention (Example 1) has an initial viscosity lower than those of the epoxy resin compositions of Comparative Examples 1 and 2, and cures faster than those in a shorter gelation time. Thus, the epoxy resin composition comprising the curing agent is suitable for producing various molded articles using a molding process such as the high cycle RTM process. Furthermore, Table 2 and Fig. 1 show that while the initial YI value (UV irradiation dose 0 kJ/m²) of the cured product of the epoxy resin composition of the present invention (Example 1) is higher than that of the cured product of Comparative Example 1, the increase in the YI value after the weatherability test is suppressed, and thus the composition has good weatherability. Furthermore, a comparison with Comparative Example 2 shows that the cured product of Example 1 has low initial YI value and its increase in the YI value after the weatherability test is suppressed.

### Example 2 (Production of CFRP)

A carbon fiber cloth ("CO6343" manufactured by Toray Industries Inc., T300 plain weave cloth, 3K, 198 g/m², 0.25 mm thick, 4 plies) was impregnated with the epoxy resin composition prepared in Example 1 by hand lay-up molding at room temperature to prepare a CFRP substrate. Subsequently, the CFRP substrate was placed in aluminum upper and lower molds which had been previously heated at 120°C in an oven, and the molds were immediately sealed and heated for 3 minutes to cure the epoxy resin composition to give CFRP. The resulting CFRP was easily released from the aluminum upper and lower molds, showing that curing of the epoxy resin composition proceeded in short time. Furthermore, the product has good appearance without defect caused by poor impregnation of carbon fiber with the epoxy resin composition.

### Industrial Applicability

The epoxy resin composition of the present invention enables FRP for automotive structural materials and building materials to be produced with high productivity by the high cycle RTM process or the like. Furthermore, the present invention can provide a cured product and FRP having excellent weatherability with little yellowing even when exposed to an environment of ultraviolet irradiation for long time.

## Claims

1. An epoxy resin composition comprising:
(A) an epoxy resin having an alicyclic structure and
(B) an epoxy resin curing agent comprising bis(aminomethyl)cyclohexane.

2. The epoxy resin composition according to claim 1, wherein the component (A) is an epoxy resin represented by the following general formula (1): 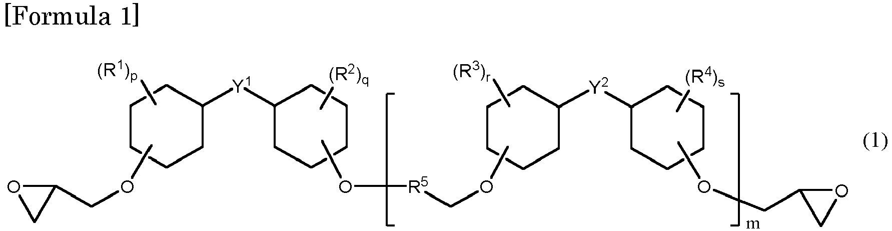 wherein R¹ to R⁴ are each independently an alkyl group having 1 to 6 carbon atoms, and p, q, r and s are each independently an integer of 0 to 4; a plurality of R¹s, R²s, R³s and R⁴s are all the same or different from each other; Y¹ and Y² are each independently a single bond, -CH₂-, -CH(CH₃)- or -C(CH₃)₂-; R⁵ is -CH₂CH(OH)- or -CH(OH)CH₂-; and m represents an average number of repeat units and is a number of 0 to 2.

3. The epoxy resin composition according to claim 1 or 2, wherein a content of bis(aminomethyl)cyclohexane in the component (B) is 30% by mass or more.

4. The epoxy resin composition according to any one of claims 1 to 3, wherein a content of a sulfonic acid curing accelerator is less than 0.5% by mass.

5. A cured product of the epoxy resin composition according to any one of claims 1 to 4.

6. A fiber-reinforced composite material comprising a cured product of the epoxy resin composition according to any one of claims 1 to 4 and a reinforcing fiber.

7. The fiber-reinforced composite material according to claim 6, wherein the reinforcing fiber is carbon fiber.
